(19) Europäisches Patentamt
European Patent Office
Office européen des brevets

(11) Numéro de publication: **0 090 748**
**B1**

(12) # FASCICULE DE BREVET EUROPÉEN

(45) Date de publication du fascicule du brevet: **05.11.86**

(51) Int. Cl.⁴: **C 08 L 27/06**, C 08 K 5/00

(21) Numéro de dépôt: **83420050.3**

(22) Date de dépôt: **21.03.83**

(54) **Procédé de stabilisation de polymères à base de chlorure de vinyle, compositions stabilisantes pour la mise en oeuvre du procédé et polymères ainsi stabilisés.**

(30) Priorité: **30.03.82 FR 8205700**

(43) Date de publication de la demande: **05.10.83 Bulletin 83/40**

(45) Mention de la délivrance du brevet: **05.11.86 Bulletin 86/45**

(84) Etats contractants désignés: **AT BE CH DE FR GB IT LI LU NL SE**

(56) Documents cité:
**EP-A-0 022 047**
**GB-A-1 001 344**

**Le dossier contient des informations techniques présentées postérieurement au dépôt de la demande et ne figurant pas dans le présent fascicule.**

(73) Titulaire: **RHONE- POULENC SPECIALITES CHIMIQUES, "Les Miroirs" 18, Avenue d'Alsace, F-92400 Courbevoie (FR)**

(72) Inventeur: **Gay, Michel, 11, rue Garibaldi, F-69006 Lyon (FR)**

(74) Mandataire: **Vignally, Noel, RHONE- POULENC INTERSERVICES Service Brevets Chimie Centre de Recherches de Saint- Fons B.P. 62, F-69192 Saint- Fons Cedex (FR)**

**EP 0 090 748 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention concerne un procédé de stabilisation de polymères à base de chlorure de vinyle, des compositions stabilisantes pour mettre en oeuvre ledit procédé et les polymères ainsi stabilisés.

Les polymères à base de chlorure de vinyle doivent être soumis à des températures de l'ordre de 160°C à 180°C, parfois même à des températures plus élevées, notamment lors de la préparation d'objets conformés.

Pour éviter ou pour ralentir les phénomènes de jaunissement dus à ces traitements thermiques, les polymères vinyliques sont stabilisés par adjonction de divers composés.

De nombreux documents se rapportent à l'emploi de composés soufrés pour cette stabilisation thermique.

Une grande partie de ces documents concerne des composés organiques soufrés de l'étain, composés ayant une plus ou moins grande toxicité.

GB-A-1 001 344, revendique des compositions à base de chlorure de polyvinyle (PVC) comprenant:

a) un ou plusieurs composés organiques du lithium, du sodium, du potassium, du magnésium, du calcium, du zinc, du strontium, du cadmium, du baryum, de l'aluminium, du plomb ou de l'étain;

b) un composé organique ou organométallique du soufre, ayant un point d'ébullition sous pression atmosphérique qui ne soit pas inférieur à 200°C; un tel composé peut être un sulfure d'alkyle ou d'aryle, un acide mercapto-carboxylique comme notamment l'acide thioglycolique, l'acide dithiodiglycolique, l'acide mercapto-propionique, l'acide thiodipropionique, l'acide dithiodipropionique ou des esters de ces acides;

c) un antioxydant organique, qui inhibe les réactions en chaîne de décomposition du PVC et qui est notamment un dérivé substitué du phénol.

Il est très difficile de choisir parmi les innombrables composés soufrés qui entrent dans la large définition de ce brevet, ceux qui ont effectivement une action thermostabilisante.

Le brevet européen EP-A1-22 047 décrit un procédé efficace de stabilisation des polymères à base de chlorure de vinyle à l'aide d'au moins un dérivé organique du zinc, un dérivé organique d'un métal du groupe IIa de la classification périodique des éléments, d'un polyol et d'un ester de l'acide thioglycolique.

Il a maintenant été trouvé ce qui représente l'un des objets de la présente invention, un procédé de stabilisation des polymères halogénés, et notamment des polymères à base de chlorure de vinyle, comportant:

a) au moins un dérivé organique du zinc;

b) au moins un dérivé organique d'un métal du groupe IIa de la classification périodique des éléments (telle que publiée par exemple dans la 51ème édition de HANDBOOK OF CHEMISTRY AND PHYSICS de "The Chemical Rubber Company");

et caractérisé par l'emploi:

c) d'au moins un diester de l'acide thiomalique.

Dans la description plus précise de l'invention qui suit on appellera radical alkyle inférieur un radical alkyle ayant de 1 à 4 atomes de carbone et radical alkoxy inférieur un radical alkoxy ayant de 1 à 4 atomes de carbone.

Les diesters de l'acide thiomalique qui sont utilisés dans le procédé selon l'invention sont plus particulièrement ceux qui répondent: - soit à la formule générale (I):

$$R_1\text{-OOC} - \underset{\displaystyle SH}{\underset{|}{CH}} - CH_2 - COOR_2 \qquad (I)$$

dans laquelle les radicaux $R_1$ et $R_2$, identiques ou différents représentent:

un radical aliphatique linéaire ou ramifié, saturé ou comportant une ou plusieurs insaturations éthyléniques, et pouvant ccmprendre un ou plusieurs atomes d'oxygène - O - ou de soufre - S -,

un radical cycloaliphatique ou cycloaliphatique-aliphatique, mono- ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O -,

un radical arylaliphatique, la partie cyclique portant éventuellement un ou plusieurs substituants alkyles ou alkoxy et pouvant être liée à la partie aliphatique par un atome d'oxygène - O -,

. un enchaînement de plusieurs des radicaux précédemment cites; - soit à la formule générale (II):

$$OH - [-R'OOC - \underset{\displaystyle SH}{\underset{|}{CH}} - CH_2 - COO -]_n\text{-}R' - OH \qquad (II)$$

dans laquelle:

- n est un nombre entier de 1 à 10,
- R' représente:

un radical aliphatique divalent, linéaire ou ramifié, saturé ou comportant une ou plusieurs insaturations éthyléniques, et dont l'enchaînement peut comprendre un ou plusieurs atomes d'oxygène - O - ou de soufre - S -, ou un ou plusieurs groupements - COO -;

un radical divalent cycloaliphatique ou cycloaliphatique-aliphatique, mono ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O -;

un radical arylaliphatique divalent, la partie cyclique portant éventuellement un ou plusieurs substituants alkyle ou alkoxy et pouvant être liée à la partie aliphatique par un atome d'oxygène - O -;

un enchaînement de plusieurs des radicaux précédemment cités.

Par dérivé organique du zinc de même que par dérivé organique d'un métal du groupe IIa, on entend:

- des sels dont l'anion provient principalement d'acides monocarboxyliques ou dicarboxyliques aliphatiques ayant de 2 à 24 atomes de carbone, saturés ou non ou de monoesters, d'alkyle ayant 1 à 24 atomes de carbone ou d'alkényle ayant 3 à 24 atomes de carbone, des acides dicarboxyliques aliphatiques précédents, substitués ou non, ou d'acides monocarboxyliques aromatiques ou alicycliques substitués ou non; parmi les anions les plus couramment utilisés, on peut citer ceux qui dérivent des acides maléique, acétique, diacétique, propionique, hexanoïque, éthyl-2 hexanoïque, octanoïque, décanoïque, undécanoique, laurique, myristique, palmitique, stéarique, oléique, ricinoléique, béhénique, hydroxystéarique, hydroxyndécanoïque, benzoïque, phénylacétique, alkylbenzoïque, paratertiobutylbenzoïque, salicylique;

- des dérivés métalliques (phénolates) de composés phénoliques substitués ou non, tels que le phénol ou les phénols substitués par un radical alkyle ayant de préference de 4 à 24 atomes de carbone;

- des mercaptides par exemple le zinciosulfuro-2 acétate d'isooctyle;

- des chélates de composés β-dicarbonylés.

Pour des raisons pratiques ou pour des raisons économiques, on choisit de préférence, parmi les dérivés métalliques cités précédemment, ceux qui dérivent des acides carboxyliques ou des composés phénoliques.

Ainsi on utilise fréquemment comme composé a) les sels de zinc des acides propionique, octanoïque, laurique, stéarique, oléique, ricinoléique, benzoïque, paratertiobutylbenzoïque, salicylique ou du maléate de monoéthyl-2 hexyle et les nonylphénates de zinc; comme composé b) on utilise fréquemment les sels de calcium, de magnésium, de baryum ou de strontium des acides propionioue, octanoïque, laurique, stéarique, oléique, ricinoléique, benzoïque, paratertiobutylbenzoïque, salicylique et du maléate de monoéthyl-2 hexyle et les nonylphénates de calcium, de magnésium, de baryum ou de strontium.

Des taux de 0,005 à 1 % en poids de composé a) par rapport au polymère à stabiliser et de préférence de 0,01 à 0,6 % conduisent à de très bons résultats.

Parmi les dérivés mentionnés en (b), et dont les plus utilisés sont les dérivés du calcium, du baryum, du strontium ou du magnésium, on préférera les dérivés du calcium et les dérivés du magnésium, surtout ceux du calcium qui conduisent à de très bons résultats. Ces dérivéssont également couramment utilisés en mélanges par exemple Ca et Ba ou Ca et Mg. Pour des raisons d'efficacité on préfère le mélange Ca-Mg parmi ces mélanges.

Des taux de 0,005 à 5 % en poids de composé (b) par rapport au polymère à stabiliser et de préférence de 0,02 à 1 % permettent en addition avec les autres stabilisants revendiqués l'obtention de bons résultats.

Parmi les diesters de l'acide thiomalique mentionnés précédemment, on utilise plus particulièrement:

- ceux qui répondent à la formule générale (I) dans laquelle $R_1$ et$R_2$ identiques ou différents représentent:

un radical aliphatique linéaire ou ramifié, saturé ou comportant une ou plusieurs insaturations éthyléniques, ayant de 2 à 36 atomes de carbone et pouvant comprendre un ou plusieurs atomes d'oxygène - O - ou de soufre - S -;

un radical cycloaliphatique formé d'un ou plusieurs cycles, le ou les cycles ayant au total de 5 à 12 atomes de carbone et étant éventuellement substitués par un ou plusieurs radicaux alkyles ou alkoxy ayant 1 à 6 atomes de carbone;

un radical cycloalkylaliphatique ou cycloalkénylaliphatique formé d'un ou plusieurs cycles ayant au total 5 à 12 atomes de carbone, et d'un enchaînement aliphatique ayant 1 à 6 atomes de carbone et pouvant être lié à la partie cyclique par l'intermédiaire d'un atome d'oxygène - O -;

un radical arylaliphatique dont la partie cyclique est éventuellement substituée par un ou plusieurs radicaux alkyles ayant de 1 à 12 atomes de carbone ou alkoxy ayant 1 à 6 atomes de carbone et dont l'enchaînement aliphatique a 1 à 6 atomes de carbone et peut être lié à la partie cyclique par l'intermédiaire d'un atome d'oxygène - O -;

un enchaînement de plusieurs des radicaux précédemment cités;

- ceux qui répondent à la formule générale (II) dans laquelle:

- n est un nombre entier de 1 à 6

- R' représente:

un radical aliphatique divalent linéaire ou ramifié, saturé ou comportant une ou plusieurs insaturations éthyléniques, ayant de 2 à 24 atomes de carbone et dont l'enchaînement peut comprendre un ou plusieurs atomes d'oxygène - O - ou de soufre - S -;

un radical - $R_3$ - COO - $R_4$ -, $R_3$ et $R_4$ identiques ou différents étant des radicaux divalents aliphatiques lineaires ou ramifiés, saturés ou comportant une ou plusieurs insaturations éthyléniques et ayant: $R_3$ de 1 à 18 atomes de carbone et $R_4$ de 2 à 18 atomes de carbone;

un radical cycloaliphatique divalent formé d'un ou plusieurs cycles ayant au total de 5 à 12 atomes de carbone et pouvant être substitués par un ou plusieurs radicaux alkyles ou alkoxy ayant de 1 à 6 atomes de carbone;

un radical divalent cycloalkylènealkylène ou cycloalkylènedialkylène ou cycloalkénylènealkylène ou

cycloalkénylènedialkylène comportant un ou plusieurs cycles ayant au total de 5 à 12 atomes de carbone et pouvant être substitués par un ou plusieurs radicaux alkyles ou alkoxy ayant de 1 à 6 atomes de carbone et dont les parties aliphatiques ont de 1 à 6 atomes de carbone et peuvent être liées au cycle par l'intermédiaire d'un atome d'oxygène - O -;

un radical phénylènedialkylène dont le cycle est éventuellement substitué par un ou plusieurs radicaux alkyles ou alkoxy ayant de 1 à 6 atomes de carbone et dont les parties aliphatiques peuvent être liées au cycle par l'intermédiaire d'un atome d'oxygène - O -;

un enchaînement de plusieurs des radicaux précédemmment cités.

Pour des problèmes de mise en oeuvre à température élevée des polymères à base de chlorure de vinyle, il est préférable d'utiliser dans le procédé selon l'invention des diesters thiomaliques ayant un point d'ébullition supérieur à 150° C. Le plus souvent ce point d'ébullition est au moins égal à 170° C.

Parmi les diesters thiomaliques définis précédemment on préfère utiliser:

- ceux qui répondent à la formule générale (I) dans laquelle $R_1$ et $R_2$, identiques ou différents représentent:

un radical aliphatique monovalent, linéaire ou ramifié, saturé ou comportant une ou plusieurs insaturations éthyléniques, ayant de 4 à 36 atomes de carbone et dont l'enchaînement peut comprendre un ou plusieurs atomes d'oxygène - O - ou de soufre - S -;

un radical cyclohexyle ou cyclohexylalkyle, dont le cycle est éventuellement substitué par un ou plusieurs radicaux alkyles ou alkoxy ayant 1 à 6 atomes de carbone et dont l'éventuelle partie aliphatique comprend de 1 à 6 atomes de carbone et peut être liée au cycle par un atome d'oxygène - O -;

un radical phénylalkyle dont le cycle est éventuellement substitué par un ou plusieurs radicaux alkyles ou alkoxy ayant 1 à 6 atomes de carbone et dont la partie aliphatique comprend de 1 à 6 atomes de carbone et peut être liée au cycle par un atome d'oxygène - O -;

un enchaînement de plusieurs des radicaux précédents;

- et ceux qui répondent à la formule générale (II) dans laquelle:

- n est un nombre entier de 1 à 4,

- R' représente:

un radical alkylène linéaire ou ramifié ayant de 2 à 24 atomes de carbone;

un radical - $R_3$ - COO - $R_4$ -, $R_3$ et $R_4$ identiques ou différents étant des radicaux aliphatiques linéaires ou ramifiés, saturés ou comportant une ou plusieurs insaturations éthyléniques et ayant: $R_3$ de 1 à 18 atomes de carbone et $R_4$ de 2 à 18 atomes de carbone;

un radical cyclohexylène ou un radical cyclohexylènealkylène ou un radical cyclohexylènedialkylène, dont le cycle est éventuellement substitué par un ou plusieurs radicaux alkyles ou alkoxy ayant 1 à 6 atomes de carbone et dont les éventuelles parties aliphatiques comprennent de 1 à 6 atomes de carbone et peuvent être liées au cycle par un atome d'oxygène - O -;

un radical tricyclo (5, 2, 1, $0^{2,6}$) décanediméthylène-4,8;

un radical phénylènedialkylène, dont le cycle est éventuellement substitué par un ou plusieurs radicaux alkyles ou alkoxy ayant 1 à 6 atomes de carbone et dont les parties aliphatiques comprennent de 1 à 6 atomes de carbone et peuvent être liées au cycle par un atome d'oxygène - O -;

. un enchaînement de plusieurs des radicaux précédents.

A titre d'exemples de diesters thiomaliques que l'on peut utiliser dans le cadre du procédé selon l'invention on peut citer notamment:

- le thiomalate de butyle,
- le thiomalate de hexyle,
- le thiomalate de (éthyle-2 hexyle),
- le thiomalate d'octyle,
- le thiomalate de dodécyle,
- le thiomalate d'octadécyle,
- le thiomalate d'eicosyle,
- le thiomalate de benzyle,
- le thiomalate de cyclohexyle,
- le thiomalate de phénéthyle,
- le thiomalate de tertiobutyl-4 cyclohexyle,
- le thiomalate de mercapto-2 éthyle,
- le thiomalate de butoxy-2 éthyle,
- le thiomalate d'éthoxy-2 éthyle,
- le thiomalate de (n-butoxy-2 éthoxy)-2 éthyle,
- le thiomalate de (n-éthoxy-2 éthoxy)-2 éthyle,
- le thiomalate d'éthylène glycol,
- le thiomalate de propanediol-1,2,
- le thiomalate de propanediol-1,3,
- le thiomalate de butanediol-1,2,
- le thiomalate de butanediol-1,3,
- le thiomalate de butanediol-1,4,
- le thiomalate de butanediol-1,6,
- le thiomalate d'hexanediol-1,6,

- le thiomalate de néopentylglycol,
- le thiomalate de méthyl-2 propyl-2 propanediol-1,3,
- le thiomalate de triméthyl-2,2,4 pentanediol-1,3,
- le thiomalate de triméthyl-1,2,6 hexanediol,
- le thiomalate d'éthyl-2 hexanediol-1,3,
- le thiomalate de bis [(hydroxy-2 éthoxy)-4 phényl] -2,2 propane,
- le thiomalate de bis [(hydroxy-2 propoxy)-4 phényl] -2,2 propane,
- le thiomalate de bis (hydroxy-méthyl)-1,4 cyclohexyle
- le thiomalate de bisphénol A hydrogéné,
- le thiomalate de bis (hydroxy-méthyl)-4,8 tricyclo 5,2,1,$0^{2,6}$ décyle,
- le thiomalate de cyclohexanediol-1,4,
- le thiomalate du thio-2,2' diéthanol.

Les diesters thiomaliques sont utilisés dans des proportions qui varient beaucoup selon leur poids moléculaire, mais qui sont généralement comprises entre 0,005 et 5 % et de préférence 0,5 et 2 % en poids par rapport au polymère.

D'une manière générale on peut indiquer que la proportion pondérale de chacun des constituants des compositions selon l'invention sera d'autant plus élevée dans les compositions polymériques à stabiliser que celles-ci seront plus rigides, c'est-à-dire contiendront moins de plastifiant.

Dans l'intervalle des différentes proportions données pour chacun des constituants a), b) et c) par rapport au polymère, il est bien entendu que l'homme de métier pourra être amené à adapter les rapports relatifs de ces différents constituants, afin d'obtenir telle ou telle formulation plus particulièrement destinée à fournir le résultat désiré, ou en fonction de l'origine ou du mode de préparation du polymère.

Ainsi par exemple les polymères préparés en suspension pourront en général contenir une proportion de zinc plus élevée que les polymères préparés en masse, mais ces proportions restent néanmoins préférentiellement comprises dans les valeurs indiquées précédemment. Conjointement aux dérivés organiques du zinc, des métaux du groupe IIa de la classification périodique et aux esters de l'acide thiomalique, il peut être intéressant d'utiliser un polyol dans la mise en oeuvre du procédé selon l'invention, bien qu'un tel composé ne présente pas de caractère d'indispensabilité. Sa présence est particulièrement intéressante pour stabiliser des polymères à base de chlorure de vinyle préparés en masse.

Les polyols conviennent généralement pour allonger l'effet stabilisant des composés métalliques ou organiques utilisés dans le procédé selon l'invention. Un compromis doit toutefois être trouvé car ces produits ont tendance à colorer les compositions. Pour des problèmes de mise en oeuvre à température élevée des polymères à base de chlorure de vinyle, il est préférable que les polyols utilisés dans le procédé de stabilisation selon l'invention aient un point d'ébullition supérieur à 150° C et le plus souvent supérieur à 170° C.

A titre d'exemples de tels polyols on peut citer des triols comme le triméthylolpropane, le glycérol, l'hexane triol-1,2,6, le butane triol-1,2,4 et le trishydroxyéthylisocyanurate, des tétrols comme le pentaérythritol, le diglycérol, des pentitols commed le xylitol, des hexitols comme le sorbitol, le mannitol et le dipentaérythritol, des polyols à huit groupes hydroxyle comme le tripentaérythritol et des polymères à groupes hydroxyle libres comme les alcools polyvinyliques, notamment ceux dans lesquels il reste moins de 30 % en moles de groupes esters par rapport à l'ensemble des groupes hydroxyle et esters et qui présentent une viscosité à 20° C en solution aqueuse à 4 % en poids comprise entre environ 4 Pascal.seconde et 60 Pascal.seconde.

En général on utilise de 0,005 % à 1 % en poids de polyol par rapport au polymère à stabiliser et de préférence de 0,01 % à 0,6 %.

Il a été trouvé que les polyols ayant plus de quatre groupes hydroxyle dans leur molécule donnent des résultats particulièrement satisfaisants.

Ainsi des polyols comme le sorbitol, le mannitol et le xylitol sont particulièrement efficaces dans le procédé selon l'invention et cela, même utilisés à de faibles doses. Ainsi, bien que ces composés soient employés à des doses situées de préférence entre 0,01 % et 0,25 % en poids, par rapport au polymère, un effet d'amélioration de la stabilisation des compositions polymériques les contenant est déjà net, et on n'observe pas d'effet parasite de coloration, à des teneurs aussi faibles que 0,005 % à 0,01 % en poids par rapport au polymère.

Les diesters thiomaliques utlisés dans le procédé selon l'invention sont facilement obtenus par estérification de l'acide thiomalique avec divers composés mono ou dihydroxylés. Parmi ces composés hydroxylés on indiquera plus particulièrement ceux qui suivent:

- lorsque les diesters thiomaliques répondent à la formule générale (I), les radicaux $R_1$ et $R_2$ dérivent de composés monohydroxylés $R_1$ - OH et/ou $R_2$-OH tels que par exemple:

. les alcools octyliques, décyliques, dodécyliques, tridécyliques, tétradécyliques, hexadécyliques, octadécyliques, eicosyliques, tétracosyliques, triacontylîques, hexatriacontyliques, ou de mélanges d'alcools en $C_{11}$ à $C_{15}$ (tels que ceux commercialisés sous la marque SYNPROL);

. le cyclohexanol, l'alcool benzylique substitué ou non, les alcools phényléthyliques, l'alcool β-phénoxyéthylique;

. le mercapto-2 éthanol, le butoxy-2 éthanol, l'éthoxy-2 éthanol, le (n-butoxy-2 éthoxy)-2 éthanol, l'(éthoxy-2 éthoxy)-2 éthanol;

- lorsque les diesters thiomaliques répondent à la formule générale (II) le radical divalent R' dérive d'un composé dihydroxylé ou d'un mélange de composés dihydroxylés de formule: OH - R' - OH tels que par exemple:

. des diols aliphatiques comme l'éthylèneglycol, le propanediol-1,2, le propanediol-1,3, le butanediol-1,2, le butanediol-1,3, le butanediol-1,4, le butanediol-2,3, le pentanediol-1,5, le diméthyl-2,2 propanediol-1,3, le diéthyl-2,2 propanediol-1,3, le méthyl-2 propyl-2 propanediol-1,3, l'éthyl-2 hexanediol-1,3, l'hexanediol-1,6, le triméthyl-2,2,4 pentanediol-1,3, les décanediols, les dodécanediols, les pentadécanediols, les octadécanediols, les eicosanediols, les tétracosanediols, le thio-2,2' diéthanol;

. certains esters de polyols comme le mono (hydroxypivalate) du diméthyl-2,2 propanediol-1,3 ou le monostéarate de glycéryle;

. des diols cycliques comme le bis (hydroxyméthyl)-1,2 cyclohexane, le bis(hydroxyméthyl)-1,3 cyclohexane, le bis (hydroxyméthyl)-1,4 cyclohexane, le dihydroxy-1,4 cyclohexane, le bis (hydroxyméthyl)-1,4 benzène, le bisphénol A hydrogéné, le bis /(hydroxy-2 éthoxy)-4 phényl /-2,2 propane (ou BHEPP), le bis/(hydroxy-2 propoxy)-4 phényl /-2,2 propane (ou BHPPP);

. des polyéthers à fonctions hydroxyle terminales comme les polyéthylèneglycols et les polypropylèneglycols de basse masse moléculaire (par exemple inférieure à 600),

. des polyesters linéaires à fonctions hydroxyles terminales ayant une basse masse moléculaire (par exemple inférieure à 600).

Lorsque l'on prépare des diesters thiomaliques de formule (II) par réaction de l'acide thiomalique avec un composé dihydroxylé HO - R' - OH il est bien évident qu'il faut utiliser un excès de diol, de manière à obtenir de manière connue des composés de formule (II) ayant des fonctions hydroxyles terminales et le nombre moyen n désiré de motifs récurrents

$$-(-R' - OOC - \underset{\substack{| \\ SH}}{CH} - CH_2 - COO)- .$$

Généralement on utilise (n + 1) moles de composés dihydroxylés pour n moles d'acide thiomalique, n étant le plus souvent un nombre entier de 1 à 10.

A titre de moyen pour la mise en oeuvre du procédé selon l'invention, un autre objet de l'invention consiste dans le mélange d'au moins un dérivé organique du zinc, d'au moins un dérivé organique d'un métal du groupe IIa de la classification périodique des éléments et d'au moins un diester de l'acide thiomalique.

De tels mélanges peuvent être préparés en toutes proportions; en général les proportions en poids des différents constituants sont telles oue l'on ait:

- de 5 à 40 % de dérivé organique du zinc.
- de 5 à 90 % de dérivé organique d'un métal du groupe IIa de la classification périodique des éléments.
- de 5 à 90 % de diester de l'acide thiomalique.

Enfin l'invention consiste aussi dans les compositions à base de chlorure de polyvinyle stabilisées obtenues par l'application du procédé selon l'invention.

Par composition à base de chlorure de polyvinyle, on entend des compositions contenant un homopolymère du chlorure de vinyle, un copolymère de chlorure de vinyle avec divers autres monomères ou un mélange de polymères ou copolymères dont une partie majoritaire est obtenue à partir de chlorure de vinyle.

En général tout type d'homopolymère de chlorure de vinyle peut convenir quel que soit son mode de préparation: polymérisation en masse, en suspension, en dispersion ou de tout autre type et quelle que soit sa viscosité intrinsèque.

Les homopolymères de chlorure de vinyle peuvent être modifiés chimiquement comme par exemple les polymères de chlorure de vinyle chlorés.

De nombreux copolymères de chlorure de vinyle peuvent également être stabilisés contre les effets de la chaleur: jaunissement et dégradation. Ils comprennent des copolymères obtenus par copolymérisation du chlorure de vinyle avec d'autres monomères présentant une liaison éthylénique polymérisable, comme par exemple les esters vinyliques: acétate de vinyle, chlorure de vinylidéne; les acides (ou leurs esters) maléique ou fumarique; les oléfines: éthylène - propylène - hexène; les esters acryliques; le styrène; ou les éthers vinyliques: n-vinyldodécyléther.

Ces copolymères contiennent habituellement au moins 50 % en poids de motifs chlorure de vinyle. Toutefois l'invention s'applique particulièrement bien aux copolymères contenant au moins 80 % en poids de motifs chlorure de vinyle.

L'invention s'applique bien aussi aux mélanges de polymères comprenant des quantités minoritaires d'autres polymères comme les polyoléfines halogénées ou les copolymères acrylonitrile - butadiène - styrène ou aux mélanges d'homopolymères ou de copolymères tels que définis plus haut.

Ces compositions peuvent être soit "rigides" soit "flexibles". Lorsqu'on utilise des compositions "rigides" elles peuvent comporter alors des modificateurs de résistance au choc, des pigments et/ou des charges, des lubrifiants aidant à leur mise en oeuvre, en plus du polymère et des divers stabilisants ou adjuvants.

Lorsqu'on utilise des compositions "flexibles", elles peuvent comprendre des plastifiants primaires ou secondaires, des pigments et/ou des charges, des lubrifiants etc... en plus du polymère et des divers stabilisants ou adjuvants. Ces stabilisants sont essentiellement des antioxydants, des stabilisants "lumière" ou UV ainsi que d'autres composés connus pour leur effet sur la stabilisation thermique comme par exemple les époxydes, les phosphites, les composés phénoliques.

Ces époxydes sont généralement des composés complexes, habituellement des polyglycérides époxydés comme l'huile de soja époxydée, les huiles de lin ou de poisson époxydées, la talloil époxydée, ou des esters époxydés d'acides gras, ou des hydrocarbures époxydés comme le polybutadiène époxydé, ou des éthers époxydés.

Divers phosphites d'alkyle ou d'aryle sont aussi connus pour leur activité stabilisante comme par exemple le phosphite de phényle et d'éthyl-2 hexyle, le phosphite de triisodécyle ou le diphosphite de diisooctyle et de pentaérythryle.

Des composés phénoliques ont aussi été utilisés comme stabilisants thermiques: il s'agit principalement de l'hydroxytoluène butylé (BHT) et d'autres phénols substitués.

Il va de soi que l'on ne sort pas de l'invention en ajoutant aux stabilisants revendiqués de petites quantités de stabilisants additionnels maintenant bien connus de l'homme de l'art, comme par exemple des composés β-dicétoniques ou des composés organiques azotés tels que les esters de l'acide β-aminocrotonique ou les dérivés de l'alpha-phénylindole ou les dérivés des dihydropyridines substituées ou des composés soufrés tels que les esters de l'acide thioglycolique.

Les trois stabilisants utilisés dans le procédé selon l'invention peuvent être incorporés en même temps que les autres adjuvants. Ils peuvent aussi être mélangés entre eux ou avec certains des adjuvants. La composition stabilisante sera alors ultérieurement incorporée au polymère. Toutes les méthodes usuelles connues dans ce domaine peuvent convenir pour réaliser le mélange des ingrédients. Toutefois l'homogénéisation de la composition finale peut avantageusement être faite sur malaxeur ou mélangeur à rouleaux à une température telle que la composition devienne fluide, normalement entre 150 et 200 °C pour le PVC et pendant une durée suffisante pour une bonne homogénéisation, soit environ de 3 à 20 minutes.

Les compositions stabilisées à base de chlorure de polyvinyle selon l'invention peuvent être mises en oeuvre selon toutes les techniques habituellement utilisées pour travailler les compositions de PVC et de ses copolymères par exemple: injection; extrusion; extrusion soufflage; calandrage; moulage par rotation.

Le procédé de stabilisation selon l'invention permet de retarder considérablement, sinon de supprimer, l'apparition du jaunissement pendant la période où la composition à base de chlorure de polyvinyle mise en oeuvre est chauffée à 180 °C et plus, et d'obtenir des produits finis transparents, incolores, homogènes et ne présentant pas d'exsudation.

Dans les exemples suivants, on prépare les compositions en plaçant les divers constituants sous forme de poudre ou éventuellement de liquide dans un mélangeur rapide, que l'on fait tourner à froid pendant le temps nécessaire à une bonne homogénéisation, généralement au moins cinq minutes.

Puis à partir de ces compositions homogènes, on prépare au moyen d'un malaxage sur mélangeur à 2 cylindres à une température de 160 à 200°C pendant trois ou quatre minutes des plaques de 1 mm d'épaisseur dans lesquelles on découpe des éprouvettes rectangulaires d'environ 1 x 2 cm que l'on place en étuve ventilée à 180 °C pendant des durées variables.

On détermine alors la coloration des échantillons par comparaison avec un disque Lovibond selon l'échelle GARDNER.

**Exemple 1 à 19**

On prépare la composition de base A suivante:

- 2000 g de PVC en poudre caractérisé par un indice de viscosité de 124 selon la norme NP T 51 013 et un K-Wert de 70, obtenu par polymérisation en suspension et vendu sous la marque déposée CORVIC S 71/102,
- 960 g de phtalate de dioctyle,
- 40 g d'huile de soja époxydée,
- 4 g d'un lubrifiant qui est une cire de polyéthylène
- 1,8 g d'éthyl-2 hexanoate de Zn
- 10 g de paratertiobutylbenzoate de baryum.

On prélève 19 fractions de 150,8 g chacune, de composition A (chaque fraction comporte 100 g de PVC).

A chaque fraction on rajoute une certaine quantité de l'un des thiomalates suivants:

- thiomalate (TM) de néopentylglycol (dans la formule (II) duquel n = 2 en moyenne; obtenu par condensation de 2 moles d'acide thiomalique avec 3 moles de néopentylglycol);
- TM d'éthyl-2 hexyle,
- TM de cyclohexyle,
- TM de benzyle.

On prépare à l'aide de ces différentes compositions, ainsi qu'avec la composition A non modifiée, des feuilles d'un millimètre d'épaisseur par malaxage sur mélangeur à 2 cylindres de 3 minutes à 180°C. On effectue le test de vieillissement thermique en étuve à 180°C des éprouvettes pour diverses durées.

Le tableau I ci-aprés rassemble les indices de coloration GARDNER trouvés en fonction de la durée de vieillissement.

**Tableau I**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| Témoin A | Composition A seule | | 0 | 0,5 | 1 | 2 | 3 | 3,5 | 4 | Noir A 98 min |
| 1 | TM de Néopentylglycol | 0,30 | 0 | 0 | 0 | 0 | 0 | 0,5 | 1 | bords bruns à 130 min |
| 2 | TM de Néopentylglycol | 0,40 | 0 | 0 | 0 | 0 | 0 | 0 | 0,5 | 9 à 130 min |
| 3 | TM de Néopentylglycol | 0,60 | 0 | 0 | 0 | 0 | 0 | 0 | 0,5 | 5 à 130 min |
| 4 | TM de Néopentylglycol | 0,80 | 0 | 0 | 0 | 0 | 0 | 0 | 0 | 3 à 130 min |
| 5 | TM d'éthyl-2 hexyle | 0,20 | 0 | 0 | 0 | 0 | 0 | 1 | 1,5 | Noir à 116 min |
| 6 | TM d'éthyl-2 hexyle | 0,30 | 0 | 0 | 0 | 0 | 0 | 0,5 | 1 | Noir à 115 min |

**Tableau I (suite n° 1)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| 7 | TM d'éthyl-2 hexyle | 0,40 | 0 | 0 | 0 | 0 | 0 | 0 | 0,5 | Noir à 112 min |
| 8 | TM d'éthyl-2 hexyle | 0,60 | 0 | 0 | 0 | 0 | 0 | 0 | 0,5 | Noir à 110 min |
| 9 | TM d'éthyl-2 hexyle | 0,80 | 0 | 0 | 0 | 0 | 0 | 0 | 0,5 | Noir à 107 min |
| 10 | TM de cyclohexyle | 0,20 | 0 | 0 | 0 | 0 | 0 | 0,5 | 1,5 | Noir à 110 min |
| 11 | TM de cyclohexyle | 0,30 | 0 | 0 | 0 | 0 | 0 | 0,5 | 1 | Noir à 109 min |
| 12 | TM de cyclohexyle | 0,40 | 0 | 0 | 0 | 0 | 0 | 0 | 0,5 | Noir à 109 min |
| 13 | TM de cyclohexyle | 0,60 | 0 | 0 | 0 | 0 | 0 | 0 | 0,5 | Noir à 108 min |

**Tableau I (Suite n° 2)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| 14 | TM de cyclohexyle | 0,80 | 0 | 0 | 0 | 0 | 0 | 0 | 0,5 | Noir à 108 min |
| 15 | TM de benzyle | 0,20 | 0 | 0 | 0 | 0 | 0,5 | 1 | 2 | Noir à 103 min |
| 16 | TM de benzyle | 0,30 | 0 | 0 | 0 | 0 | 0 | 0,5 | 1 | Noir à 106 min |
| 17 | TM de benzyle | 0,40 | 0 | 0 | 0 | 0 | 0 | 0 | 0,5 | Noir à 106 min |
| 18 | TM de benzyle | 0,60 | 0 | 0 | 0 | 0 | 0 | 0 | 0 | Noir à 108 min |
| 19 | TM de benzyle | 0,80 | 0 | 0 | 0 | 0 | 0 | 0 | 0 | Noir à 111 min |

**Exemple 20 à 31**

On prépare la composition de base B suivante:

- 2000 g de PVC en poudre caractérisé par un indice de viscosité de 80 selon la norme NF T 51013, obtenu par polymérisation en suspension et vendu sous la marque déposée LUCOVYL RS 8000.
- 200 g d'un agent renforçateur de choc (copolymère du butadiène, du styrène et du méthacrylate de méthyle)
- 20 g de lubrifiant vendu sous la marque CIRE E (cire à base d'ester de colophane)
- 60 g d'huile de soja époxydée,
- 2,4 d'éthyl-2 hexanoate de zinc,
- 8 g de stéarate de calcium.

On prélève 12 fractions de 114,5 g chacune de composition B (chaque fraction comporte 100 g de PVC).

A chaque fraction on rajoute une certaine quantité de l'un des thiomalates suivants:

- TM d'éthyl-2 hexyle
- TM de cyclohexyle
- TM de néopentylglycol (obtenu par condensation de 3 moles de néopentylglycol pour 2 moles d'acide thiomalique),
- TM de benzyle.

On prépare à l'aide de ces différentes compositions, ainsi qu'avec la composition B non modifiée, des feuilles d'un millimètre d'épaisseur, par malaxage sur mélangeur à 2 cylindres de 3 minutes à 180° C.

On effectue le test de vieillissement thermique des éprouvettes à 180° C.

Le tableau II ci-après rassemble les indices de coloration GARDNER trouvés en fonction de la durée de vieillissement.

**Tableau II**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| Témoin B | Composition B seule | | 3* | 10 | 10 | 10 | 10 | 10,5 | 11 | Noir à 68 min |
| 20 | TM d'éthyl-2 hexyle | 0,30 | 0 | 0 | 4 | 7 | 9 | 9,5 | 10 | taches brunes à 70 min |
| 21 | TM d'éthyl-2 hexyle | 0,60 | 0 | 0 | 0,5 | 5 | 7 | 8 | 10 | brun à 70 min |
| 22 | TM d'éthyl-2 hexyle | 1,00 | 0 | 0 | 0,5 | 3 | 6 | 7 | 10 | Noir à 70 min |
| 23 | TM de cyclohexyle | 0,30 | 0 | 0 | 2 | 6 | 8 | 9 | 10 | Noir à 70 min |
| 24 | TM de cyclohexyle | 0,60 | 0 | 0 | 0,5 | 4 | 7 | 9 | 10 | Noir à 68 min |
| 25 | TM de cyclohexyle | 1,00 | 0 | 0 | 0 | 2 | 4 | 7 | 10 | Noir à 65 min |

* Coloration rose

**Tableau II (Suite n° 1)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| 26 | TM de néopentylglycol | 0,30 | 0 | 0 | 4 | 7 | 9 | 10 | 11 | brun à 70 min |
| 27 | TM de néopentylglycol | 0,60 | 0 | 0 | 0,5 | 4 | 8 | 9 | 10 | brun à 70 min |
| 28 | TM de néopentylglycol | 1,00 | 0 | 0 | 0 | 1 | 4 | 7 | 9 | brun à 70 min |
| 29 | TM de benzyle | 0,30 | 0 | 0 | 3 | 6 | 8 | 9 | 10 | noir à 70 min |
| 30 | TM de benzyle | 0,60 | 0 | 0 | 0,5 | 4 | 7 | 8 | 9 | noir à 68 min |
| 31 | TM de benzyle | 1,00 | 0 | 0 | 0,5 | 2 | 5 | 6 | 9 | noir à 64 min |

**Exemple 32 à 50.**

On prépare la composition C suivante:

- 2 000 g de PVC en poudre, caractérisé par un indice de viscosité de 95 selon la norme NF T 51 013, obtenu par polymérisation en masse et vendu sous la maroue déposée LUCOVYL GB 9550,
- 1000 g de phthalate de dioctyle,
- 30 g d'huile de soja époxydée,
- 0,6 g de sorbitol,
- 3,6 g de stéarate de calcium,
- 1,8 g de stéarate de zinc.

On prélève 19 fractions de 151,8 g chacune, de composition C (chaque fraction comporte 100 g de PVC).

A chaque fraction on ajoute une certaine quantité de l'un des thiomalates suivants:

- TM d'éthyl-2 hexyle
- TM de cyclohexyle
- TM de néopentylglycol (obtenu par condensation de 3 moles de néopentylglycol pour 2 moles d'acide thiomalioue),
- TM de benzyle.

On prépare à l'aide de ces différentes compositions, ainsi qu'avec la composition C non modifiée, des feuilles d'un millimètre d'épaisseur, par malaxage sur mélangeur à 2 cylindres de 4 minutes à 160° C.

On effectue le test de vieillissement thermique des éprouvettes à 180° C.

Le tableau III ci-après rassemble les indices de coloration GARDNER trouvés en fonction de la durée de vieillissement.

**Tableau III**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| Témoin C | Composition C seule | | 0,5* | 2* | 4* | 6 | 9 | 10 | Noir à 51 min | |
| 32 | TM de néopentylglycol | 0,30 | 0 | 0 | 0 | 0,5 | 1 | 2 | 4 | brun à 80 min |
| 33 | TM de néopentylglycol | 0,40 | 0 | 0 | 0 | 0 | 0,5 | 1 | 2 | bords bruns à 80 min |
| 34 | TM de néopentylglycol | 0,60 | 0 | 0 | 0 | 0 | 0 | 0 | 0,5 | 3 à 80 min |
| 35 | TM de néopentylglycol | 0,80 | 0 | 0 | 0 | 0 | 0 | 0 | 0,5 | 2,5 à 80 min |
| 36 | TM d'éthyl-2 hexyle | 0,20 | 0 | 0 | 0 | 0 | 2 | 5 | 9 | noir à 65 min |
| 37 | TM d'éthyl-2 hexyle | 0,30 | 0 | 0 | 0 | 0 | 1 | 2 | 7 | noir à 67 min |

* Coloration rose

**Tableau III (Suite n° 1)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| 38 | TM d'éthyl-2 hexyle | 0,40 | 0 | 0 | 0 | 0 | 0 | 1 | 5 | noir à 69 min |
| 39 | TM d'éthyl-2 hexyle | 0,60 | 0 | 0 | 0 | 0 | 0 | 0,5 | 1 | noir à 70 min |
| 40 | TM d'éthyl-2 hexyle | 0,80 | 0 | 0 | 0 | 0 | 0 | 0 | 0,5 | noir à 72 min |
| 41 | TM de cyclohexyle | 0,20 | 0 | 0 | 0 | 0 | 1 | 4 | 9 | noir à 66 min |
| 42 | TM de cyclohexyle | 0,30 | 0 | 0 | 0 | 0 | 0 | 2 | 6 | noir à 68 min |
| 43 | TM de cyclohexyle | 0,40 | 0 | 0 | 0 | 0 | 0 | 1 | 3 | noir à 70 min |
| 44 | TM de cyclohexyle | 0,60 | 0 | 0 | 0 | 0 | 0 | 0 | 1 | noir à 72 min |

**Tableau III (Suite n° 2)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | 55 | |
| 45 | TM de cyclohexyle | 0,80 | 0 | 0 | 0 | 0 | 0 | 0 | 0,5 | noir à 74 min |
| 46 | TM de benzyle | 0,20 | 0 | 0 | 0 | 0 | 2 | 6 | 10 bords bruns | noir à 60 min |
| 47 | TM de benzyle | 0,30 | 0 | 0 | 0 | 0 | 0 | 3 | 7 | noir à 64 min |
| 48 | TM de benzyle | 0,40 | 0 | 0 | 0 | 0 | 0 | 0,5 | 4 | noir à 66 min |
| 49 | TM de benzyle | 0,60 | 0 | 0 | 0 | 0 | 0 | 0 | 1 | noir à 67 min |
| 50 | TM de benzyle | 0,80 | 0 | 0 | 0 | 0 | 0 | 0 | 0,5 | noir à 67 min |

**Exemple 51 à 65**

On prépare la composition D suivante:

- 3 000 g de PVC en poudre, caractérisé par un indice de viscosité de 95 selon la norme NF T 51 013, obtenu par polymérisation en masse et vendu sous la marque déposée LUCOVYL GB 9550,
- 1500 g de phtalate de dioctyle,
- 45 g d'huile de soja époxydée,
- 0,9 g de sorbitol.

On prélève 30 fractions de 151,53 g chacune, de composition D (chaque fraction comporte 100 g de PVC).

A chaque fraction on ajoute une certaine quantité:

- soit d'un dérivé organique de zinc, d'un dérivé organique d'un métal du groupe IIa et d'un thiomalate: essai selon l'invention,
- soit uniquement d'un dérivé organique du zinc et d'un dérivé organique d'un métal du groupe IIa: essai comparatif qui porte le même numéro que l'essai selon l'invention correspondant, mais affecté de la lettre a.

On prépare à l'aide de ces différentes compositions des feuilles d'un millimètre d'épaisseur, par malaxage sur mélangeur à 2 cylindresde 4 minutes à 160°C.

On effectue le test de vieillissement thermique des éprouvettes à 180°C.

Le tableau IV ci-après rassemble les indices de coloration GARDNER trouvés en fonction de la durée du vieillissement.

**Tableau IV**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 35 | 40 | | |
| 51 a | Stéarate de calcium<br>Paratertiobutylbenzoate de zinc | 0,30<br>0,09 | 0 | 0,5* | 2* | 5 | 9 | bords noirs | Noir à 44 min | |
| 51 | Stéarate de calcium<br>Paratertiobutylbenzoate de zinc<br>TM d'éthyl-2 hexyle | 0,30<br>0,09<br>0,60 | 0 | 0 | 0 | 0 | 0 | 0,5 | 2 à 50 min | bords noirs à 55 min |
| 52 a | Paratertiobutylbenzoate de calcium<br>Paratertiobutylbenzoate de zinc | 0,25<br>0,09 | 0 | 1* | 2* | 6 | 10 | brun | noir à 43 min | |
| 52 | Paratertiobutylbenzoate de calcium<br>Paratertiobutylbenzoate de zinc<br>TM d'éthyl-2 hexyle | 0,25<br>0,09<br>0,60 | 0 | 0 | 0 | 0 | 1 | 3,5 | noir à 49 min | |
| 53 a | Paratertiobutylbenzoate de baryum<br>Stéarate de zinc | 0,40<br>0,09 | 0 | 0,5* | 2* | 3* | 2,5 | bords bruns | Noir à 45 min | |

* Coloration rose

**Tableau IV (Suite n° 1)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 35 | 40 | | |
| 53 | Paratertiobutylbenzoate de baryum<br>Stéarate de zinc<br>TM d'éthyl-2 hexyle | 0,40<br>0,09<br>0,60 | 0 | 0 | 0 | 0 | 0 | 0 | bords bruns à 50 min | noir à 55 min |
| 54 a | stéarate de baryum<br>paratertiobutylbenzoate de zinc | 0,45<br>0,09 | 0 | 1* | 3* | 4 | 3,5 | 3 | Noir à 50 min | |
| 54 | stéarate de baryum<br>Paratertiobutylbenzoate de zinc<br>TM d'éthyl-2 hexyle | 0,45<br>0,09<br>0,60 | 0 | 0 | 0 | 0* | 0 | bords bruns | Noir à 45 min | |
| 55 a | stéarate de magnésium<br>paratertiobutylbenzoate de zinc | 0,50<br>0,09 | 0 | 0 | 2 | 5 | noir à 32 min | | | |
| 55 | stéarate de magnésium<br>paratertiobutylbenzoate de zinc<br>TM d'éthyl-2 hexyle | 0,50<br>0,09<br>0,60 | 0 | 0 | 0 | 0 | 11 bords bruns | noir à 39 min | | |

* Coloration rose

**Tableau IV (Suite n° 2)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | | |
| 56 a | Paratertiobutylbenzoate de calcium<br>Paratertiobutylbenzoate de zinc | 0,18<br>0,10 | 0 | 1* | 3* | 4 | 6 | 8 | noir à 45 min | |
| 56 | Paratertiobutylbenzoate de calcium<br>Paratertiobutylbenzoate de zinc<br>TM d'éthyl-2 hexyle | 0,18<br>0,10<br>0,60 | 0 | 0 | 0 | 0 | 0,5 | 3 (bords bruns) | noir à 44 min | |
| 57 a | Paratertiobutylbenzoate de baryum<br>Stéarate de zinc | 0,24<br>0,09 | 0 | 0,5* | 3* | 3 | 3 | 4 | Noir à 48 min | |
| 57 | Paratertiobutylbenzoate de baryum<br>stéarate de zinc<br>TM d'éthyl-2 hexyle | 0,24<br>0,09<br>0,60 | 0 | 0 | 0 | 0 | 0 | 0 | noir à 49 min | |
| 58 a | Paratertiobutylbenzoate de baryum<br>Ethyl-2 hexanoate de zinc | 0,24<br>0,44 | 0 | 0,5* | 3* | 4 | 5 | 5 | brun à 50 min | Noir à 52 min |
| 58 | Paratertiobutylbenzoate de baryum<br>Ethyl-2 hexanoate de zinc<br>TM d'éthyl-2 hexyle | 0,24<br>0,44<br>0,60 | 0 | 0 | 0 | 0 | 0 | 0 | bords bruns | noir à 56 min |

* Coloration rose

**Tableau IV (Suite n° 3)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | | |
| 59 a | stéarate de baryum<br>paratertiobutylbenzoate de zinc | 0,24<br>0,10 | 0 | 0,5* | 1* | 2,5 | 3 | noir à 35 min | | |
| 59 | stéarate de baryum<br>paratertiobutylbenzoate de zinc<br>TM d'éthyl-2 hexyle | 0,24<br>0,10<br>0,60 | 0 | 0 | 0 | 0 | 0,5 | noir à 33 min | | |
| 60 a | stéarate de magnésium<br>paratertiobutylbenzoate de zinc | 0,24<br>0,10 | 0 | 0,5 | 1 | 4 | noir | | | |
| 60 | stéarate de magnésium<br>paratertiobutylbenzoate de zinc<br>TM d'éthyl-2 hexyle | 0,24<br>0,10<br>0,60 | 0 | 0 | 0 | 0 | noir | | | |
| 61 a | stéarate de calcium<br>stéarate de zinc | 0,18<br>0,09 | 0 | 1* | 3 | 6 | 8 | 8,5 | 9 | noir à 56 min |
| 61 | stéarate de calcium<br>stéarate de zinc<br>TM d'éthyl-2 hexyle | 0,18<br>0,09<br>0,60 | 0 | 0 | 0 | 0 | 0 | 0 | 0,5 | noir à 75 min |

* Coloration rose

**Tableau IV (Suite n° 4)**

| Exemples | Stabilisants ajoutés (Poids en grammes) | Temps en minutes | Indices Gardner en fonction du temps 0 | 7 | 14 | 21 | 30 | 40 | | |
|---|---|---|---|---|---|---|---|---|---|---|
| 62 a | stéarate de calcium<br>paratertiobutylbenzoate de zinc | 0,18<br>0,10 | 0 | 0,5* | 3* | 4 | 6 | noir à 39 min | | |
| 62 | stéarate de calcium<br>paratertiobutylbenzoate de zinc<br>TM d'éthyl-2 hexyle | 0,18<br>0,10<br>0,60 | 0 | 0 | 0 | 0 | 0 | 2,5 (bords bruns) | noir à 44 min | |
| 63 a | stéarate de calcium<br>nonylphénate de zinc | 0,18<br>0,09 | 0 | 4* | 6* | 11 | 11 | 11 | 11 | noir à 59 min |
| 63 | stéarate de calcium<br>nonylphénate de zinc<br>TM d'éthyl-2 hexyle | 0,18<br>0,09<br>0,60 | 0 | 0 | 0 | 0 | 0,5 | 1,5 | 2,5 | bords bruns à 90 min |
| 64 a | stéarate de calcium<br>zinciosulfuro-2 acétate d'isooctyle | 0,18<br>0,09 | 0 | 0 | 1 | 3 | 10 | 10 | 10 | noir à 65 min |
| 64 | stéarate de calcium<br>zinciosulfuro-2 acétate d'isooctyle<br>TM d'éthyl-2 hexyle | 0,18<br>0,09<br>0,60 | 0 | 0 | 0 | 0 | 0 | 0,5 | 1 | brun à 80 min |

* Coloration rose

**Tableau IV (Suite n° 5)**

| Exemples | Stabilisants ajoutés (Poids en grammes) | Temps en minutes | Indices Gardner en fonction du temps | | | | | | | |
|---|---|---|---|---|---|---|---|---|---|---|
| | | | 0 | 7 | 14 | 21 | 30 | 40 | | |
| 65 a | Paratertiobutylbenzoate de calcium<br>Stéarate de zinc | 0,18<br>0,09 | 0 | 0 | 1,5 | 4 | 9 | 9,5 | 10 | Noir à 61 min |
| 65 | Paratertiobutylbenzoate de calcium<br>stéarate de zinc<br>TM d'éthyl-2 hexyle | 0,18<br>0,09<br>0,60 | 0 | 0 | 0 | 0 | 0 | 0,5 | 0,5 | bords bruns à 90 min |

**Revendications**

1) Procédé de stabilisation de polymères à base de chlorure de vinyle comprenant:
a) au moins un dérivé organique du zinc;
b) au moins un dérivé organique d'un métal du groupe IIa de la classification périodique des éléments;
caractérisé par l'emploi:
c) d'au moins un diester de l'acide thiomalique.

2) Procédé de stabilisation selon la revendication 1), caractérisé ence que l'ester de l'acide thiomalique répond:
- soit à la formule générale (I):

$$R_1\text{-OOC} - \underset{\displaystyle SH}{\underset{|}{CH}} - CH_2 - COOR_2 \qquad (I)$$

dans laquelle les radicaux $R_1$ et $R_2$, identiques ou différents représentent:
. un radical aliphatique linéaire ou ramifié, saturé ou comportant une ou plusieurs insaturations éthyléniques, et pouvant comprendre un ou plusieurs atomes d'oxygène - O - ou de soufre, - S -,
. un radical cycloaliphatique ou cycloaliphatique-aliphatique, mono- ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O -,
. un radical arylaliphatique, la partie cyclique portant éventuellement un ou plusieurs substituants alkyles ou alkoxy et pouvant être liée à la partie aliphatique par un atome d'oxygène - O -,
. un enchaînement de plusieurs des radicaux précédemment cités;
- soit à la formule générale (II):

$$OH -[-R'OOC - \underset{\displaystyle SH}{\underset{|}{CH}} - CH_2 - COO-]_n- R' - OH \qquad (II)$$

dans laquelle:
- n est un nombre entier de 1 à 10, - R' représente:
. un radical aliphatique divalent, linéaire ou ramifié, saturé ou comportant une ou plusieurs insaturations éthyléniques, et dont l'enchaînement peut comprendre un ou plusieurs atomes d'oxygène - O - ou de soufre - S -, ou un ou plusieurs groupements - COO -;
. un radical divalent cycloaliphatique ou cycloaliphatique-aliphatique, mono ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O -;
. un radical arylaliphatique divalent, la partie cyclique portant éventuellement un ou plusieurs substituants alkyle ou alkoxy et pouvant être liée à la partie aliphatique par un atome d'oxygène - O -;
. un enchaînement de plusieurs des radicaux précédemment cités.

3) Procédé selon l'une des revendications 1 et 2, caractérisé par l'emploi conjoint:
a) d'au moins un dérivé organique du zinc choisi dans le groupe comprenant les sels d'acides carboxyliques, les dérivés métalliques des composés phénoliques, les mercaptides et les chélates de composés β-dicarbonylés,
b) d'au moins un dérivé organique d'un métal du groupe IIa de la classification périodique des éléments choisi dans le groupe comprenant les sels d'acides carboxyliques, les dérivés métalliques des composés phénoliques, les mercaptides et les chélates de composés β-dicarbonylés de calcium, de magnésium, de baryum et de strontium,
c) d'au moins un diester de l'acide thiomalique choisi parmi: - ceux qui répondent à la formule générale (I) dans laouelle $R_1$ et $R_2$ identiques ou différents représentent:
. un radical aliphatique linéaire ou ramifié, saturé ou comportant une ou plusieurs insaturations éthyléniques, ayant de 2 à 36 atomes de carbone et pouvant comprendre un ou plusieurs atomes d'oxygène - O - ou de soufre - S -;
. un radicál cycloaliphatique formé d'un ou plusieurs cycles, le ou les cycles ayant au total de 5 à 12 atomes de carbone et étant éventuellement substitués par un ou plusieurs radicaux alkyles ou alkoxy ayant 1 à 6 atomes de carbone;
. un radical cycloalkylaliphatique ou cycloalkénylaliphatique formé d'un ou plusieurs cycles ayant au total 5 à 12 atomes de carbone, et d'un enchaînement aliphatique ayant 1 à 6 atomes de carbone et pouvant être lié à la

partie cyclique par l'intermédiaire d'un atome d'oxygène - O -;

. un radical arylaliphatique dont la partie cyclique est éventuellement substituée par un ou plusieurs radicaux alkyles ayant de 1 à 12 atomes de carbone ou alkoxy ayant 1 à 6 atomes de carbone et dont l'enchaînement aliphatique a 1 à 6 atomes de carbone et peut être lié à la partie cyclique par l'intermédiaire d'un atome d'oxygène - O -;

. un enchaînement de plusieurs des radicaux précédemment cités;

- ceux qui répondent à la formule générale (II) dans laquelle:

- n est un nombre entier de 1 à 6

- R' représente:

. un radical aliphatique divalent linéaire ou ramifié, saturé ou comportant une ou plusieurs insaturations éthyléniques, ayant de 2 à 24 atomes de carbone et dont l'enchaînement peut comprendre un ou plusieurs atomes d'oxygène - O - ou de soufre - S -;

. un radical - $R_3$ - COO - $R_4$ -, $R_3$ et $R_4$ identiques ou différents étant des radicaux divalents aliphatiques linéaires ou ramifiés, saturés ou comportant une ou plusieurs insaturations éthyléniques et ayant: $R_3$ de 1 à 18 atomes de carbone et $R_4$ de 2 à 18 atomes de carbone;

. un radical cycloaliphatique divalent formé d'un ou plusieurs cycles ayant au total de 5 à 12 atomes de carbone et pouvant être substitués par un ou plusieurs radicaux alkyles ou. alkoxy ayant de 1 à 6 atomes de carbone;

. un radical divalent cycloalkylènealkylène ou cycloalkylènedialkylène ou cycloalkénylènealkylène ou cycloalkénylènedialkylène comportant un ou plusieurs cycles ayant au total de 5 à 12 atomes de carbone et pouvant être substitué par un ou plusieurs radicaux alkyles ou alkoxy ayant de 1 à 6 atomes de carbone et dont les parties aliphatiques ont de 1 à 6 atomes de carbone et peuvent être liées au cycle par l'intermédiaire d'un atome d'oxygène - O -;

. un radical phénylènedialkylène dont le cycle est éventuellement substitué par un ou plusieurs radicaux alkyles ou alkoxy ayant de 1 à 6 atomes de carbone et dont les parties aliphatiques peuvent être liées au cycle par l'intermédiaire d'un atome d'oxygène - O -;

. un enchaînement de plusieurs des radicaux précédemmment cités.

4) Procédé selon l'une quelconque des revendications 1 à 3 caractérisé en ce que l'on utilise au moins un diester de l'acide thiomalique choisi parmi:

- ceux qui répondent à la formule générale (I) dans laquelle $R_1$ et $R_2$, identiques ou différents représentent:

. un radical aliphatique monovalent, linéaire ou ramifié, saturé ou comportant une ou plusieurs insaturations éthyléniques, ayant de 4 à 36 atomes de carbone et dont l'enchaînement peut comprendre 1 ou plusieurs atomes d'oxygène - O - ou de soufre - S -;

. un radical cyclohexyle ou cyclohexylalkyle, dont le cycle est éventuellement substitué par un ou plusieurs radicaux alkyles ou alkoxy ayant 1 à 6 atomes de carbone et dont l'éventuelle partie aliphatique comprend de 1 à 6 atomes de carbone et peut être liée au cycle par un atome d'oxygène - O -;

. un radical phénylalkyle dont le cycle est éventuellement substitué par un ou plusieurs radicaux alkyles ou alkoxy ayant 1 à 6 atomes de carbone et dont la partie aliphatique comprend de 1 à 6 atomes de carbone et peut être liée au cycle par un atome d'oxygène - O -;

. un enchaînement de plusieurs des radicaux précédents;

- et ceux qui répondent à la formule générale (II) dans laquelle:

- n est un nombre entier de 1 à 4,

- R' représente:

. un radical alkylène linéaire ou ramifié ayant de 2 à 24 atomes de carbone;

. un radical - $R_3$ - COO - $R_4$ -, $R_3$ et $R_4$ identiques ou différents étant des radicaux aliphatiques linéaires ou ramifiés, saturés ou comportant une ou plusieurs insaturations éthyléniques et ayant: $R_3$ de 1 à 18 atomes de carbone et $R_4$ de 2 à 18 atomes de carbone;

. un radical cyclohexylène ou un radical cyclohexylènealkylène ou un radical cyclohexylènedialkylène, dont le cycle est éventuellement substitué par un ou plusieurs radicaux alkyles ou alkoxy ayant 1 à 6 atomes de carbone et dont les éventuelles parties aliphatiques comprennent de 1 à 6 atomes de carbone et peuvent être liées au cycle par un atome d'oxygène - O -;

. un radical tricyclo (5, 2, 1, $0^{2,6}$) décanediméthylène-4,8;

. un radical phénylénedialkylène, dont le cycle est éventuellement substitué par un ou plusieurs radicaux alkyles ou alkoxy ayant 1 à 6 atomes de carbone et dont les parties aliphatiques comprennent de 1 à 6 atomes de carbone et peuvent être liées au cycle par un atome d'oxygène - O -;

. un enchaînement de plusieurs des radicaux précédents.

5) Procédé selon l'une quelconque des revendications 1 à 4, caractérisé par l'emploi comme dérivé organique du zinc d'au moins un sel d'acide carboxylique et/ou un phénate.

6) Procédé selon l'une quelconque des revendications 1 à 5, caractérisé par l'emploi comme dérivé organique d'un métal du groupe IIa de la classification périodique des éléments d'au moins un sel d'acide carboxylique et/ou un phénate.

7) Procédé selon l'une quelconque des revendications 1 à 6, caractérisé par l'emploi comme dérivé organique d'un métal du groupe IIa de la classification périodique des éléments d'un dérivé du calcium ou du magnésium ou d'un mélange de dérivés du calcium et du magnésium.

8) Procédé selon l'une quelconque des revendications 1 à 7 caractérisé en ce que l'on utilise:

- de 0,005 % à 1 % en poids de dérivé organique du zinc par rapport au polymère à stabiliser,
- de 0,005 % à 5 % en poids de dérivé organique d'un métal du groupe IIa de la classification périodique des éléments par rapport au polymère à stabiliser,
- de 0,005 à 5 % en poids de diester de l'acide thiomalique par rapport au polymère à stabiliser.

9) Procédé selon l'une quelconque des revendications 1 à 8, caractérisé en ce que l'on utilise:
- de 0,01 % à 0,6 à en poids de dérivé organique du zinc par rapport au polymère à stabiliser,
- de 0,02 % à 1 % en poids de dérivé organique d'un métal du groupe IIa de la classification périodique des éléments par rapport au polymère à stabiliser,
- de 0,05 à 2 % en poids de diester de l'acide thiomalique par rapport au polymère à stabiliser.

10) Procédé selon l'une quelconque des revendications 1 à 9, caractérisé par l'emploi d'un polyol ayant un point d'ébullition supérieur à 150° C.

11) Procédé selon l'une quelconque des revendications 1 à 10, caractérisé par l'emploi d'un polyol choisi dans le groupe formé par le sorbitol, le mannitol et le xylitol.

12) A titre de moyen pour la mise en oeuvre du procédé selon l'une quelconque des revendications 1 à 11, compositions stabilisantes contenant notamment:
a) de.5 à 40 % en poids de dérivé organique du zinc,
b) de 5 à 90 % en poids de dérivé organique d'un métal du groupe IIa de la classification périodique des éléments,
c) de 5 à 90 % en poids de diester de l'acide thiomalique.

13) Composition à base de polymère de chlorure de vinyle obtenu par le procédé selon l'une quelconque des revendications 1 à 11.

14) Objets conformés obtenus à partie des polymères stabilisés par le procédé selon l'une des revendications 1 à 11.

**Patentansprüche**

1. Verfahren zum Stabilisieren von Polymeren auf der Basis von Vinylchlorid umfassend:
a) mindestens eine organische Zinkverbindung und
b) mindestens eine organische Verbindung eines Metalls der Gruppe IIa des Periodensystems, gekennzeichnet durch die Verwendung von:
c) mindestens eines Diesters der Thioäpfelsaure.

2. Stabilisierungsverfahren nach Anspruch 1, dadurch gekennzeichnet, daß der Ester der Äpfelsäure entweder der allgemeinen Formel (I)

$$R_1\text{-OOC} - \underset{\displaystyle SH}{\underset{|}{CH}} - CH_2 - COOR_2 \qquad (I)$$

entspricht, in der die Substituenten $R_1$ oder $R_2$ gleich oder verschieden sind und bedeuten:
. eine aliphatische lineare oder verzweigte Gruppe, die gesättigt ist oder eine oder mehrere ethylenisch ungesättigte Bindung(en) enthält sowie gegebenenfalls ein oder mehrere Sauerstoffatom(e) - O - oder Schwefelatom(e) - S -,
. eine cycloaliphatische oder cycloaliphatisch-aliphatische Gruppe, monooder polycyclisch, wobei der cyclische Teil gegebenenfalls einen oder mehrere Alkyl- oder Alkoxysubstituenten trägt, eine oder mehrere ethylenisch ungesättigte Bindung(en) aufweisen und über ein Sauerstoffatom - Oan den aliphatischen Teil gebunden sein kann,
. eine arylaliphatische Gruppe, deren cyclischer Teil gegebenenfalls einen oder mehrere Alkyl- oder Alkoxysubstituenten trägt und über ein Sauerstoffatom - O - an den aliphatischen Teil gebunden sein kann,
. eine Verknüpfung von mehreren der vorgenannten Gruppen;
- oder der allgemeinen Formel (II):

$$OH - [-R'OOC - \underset{\displaystyle SH}{\underset{|}{CH}} - CH_2 - COO-]_n - R' - OH \qquad (II)$$

entspricht, in der
- n eine ganze Zahl von 1 bis 10 ist; und
- R' bedeutet:
. eine zweiwertige aliphatische Gruppe, linear oder verzweigt, gesättigt oder mit einer oder mehreren ethylenisch ungesättigten Bindungen, deren Kette ein oder mehrere Sauerstoffatom(e) - O - oder Schwefelatom(e) - S - oder eine oder mehrere Gruppen - COO - umfassen kann;

. eine zweiwertige cycloaliphatische oder cycloaliphatisch-aliphatische Gruppe, mono- oder polycyclisch, deren cyclischer Teil gegebenenfalls einen oder mehrere Alkyl- oder Alkoxysubstituenten trägt, eine oder mehrere ethylenisch ungesättigte Bindung(en) enthalten kann und über ein Sauerstoffatom - O - an den aliphatischen Teil gebunden sein kann;

. eine zweiwertige arylaliphatische Gruppe, deren cyclischer Teil gegebenenfalls einen oder mehrere Alkyl- oder Alkoxysubstituenten trägt und die über ein Sauerstoffatom - O - an den aliphatischen Teil gebunden sein kann;

. eine Verknüpfung von mehreren der vorgenannten Gruppen.

3. Verfahren nach einem der Ansprüche 1 und 2, gekennzeichnet durch die gemeinsame Verwendung von:

a) mindestens einer organischen Zinkverbindung, ausgewählt aus der Gruppe, umfassend die carbonsauren Salze, Metallderivate von phenolischen Verbindungen, Mercaptide und Chelate von β-Dicarbonylverbindungen,

b) mindestens einer organischen Verbindung eines Metalls der Gruppe IIa des Periodensystems, ausgewählt aus der Gruppe umfassend die carbonsauren Salze, Metallderivate von phenolischen Verbindungen, Mercaptide und Chelate von β-Dicarbonylverbindungen von Calcium, Magnesium, Barium und Strontium,

c) mindestens einem Diester der Thioäpfelsäure ausgewählt unter

- den Verbindungen der allgemeinen Formel (I), in der $R_1$ und $R_2$ gleichoder verschieden sind und bedeuten:

. eine lineare oder verzweigte aliphatische Gruppe, gesättigt oder enthaltend eine oder mehrere ethylenisch ungesättigte Bindung(en) mit 2 bis 36 Kohlenstoffatomen und gegebenenfalls mit einem oder mehreren Sauerstoffatom(en) - O - oder Schwefelatom(en) - S -;

. eine cycloaliphatische Gruppe aus einem oder mehreren Ringen, wobei der Ring/die Ringe insgesamt 5 bis 12 Kohlenstoffatome enthält/enthalten und gegebenenfalls mit einer oder mehreren Alkyl- oder Alkoxygruppe(n) mit 1 bis 6 Kohlenstoffatomen substituiert ist/sind;

. eine cycloalkylaliphatische oder cycloalkenylaliphatische Gruppe aus einem oder mehreren Ringen mit insgesamt 5 bis 12 Kohlenstoffatomen und aus einer aliphatischen Kette mit 1 bis 6 Kohlenstoffatomen, die über ein Sauerstoffatom - 0 - an den Ringteil gebunden sein kann;

. eine arylaliphatische Gruppe, deren cyclischer Teil gegebenenfalls mit einer oder mehreren Alkylgruppe(n) mit 1 bis 12 Kohlenstoffatomen oder Alkoxygruppe(n) mit 1 bis 6 Kohlenstoffatomen substuiert ist und deren aliphatische Kette 1 bis 6 Kohlenstoffatome enthält und über ein Sauerstoffatom - O - an den cyclischen Teil gebunden sein kann;

. eine Verknüpfung von mehreren der vorgenannten Gruppen;

- Verbindungen der allgemeinen Formel (II), in der

- n eine ganze Zahl von 1 bis 6 ist und

- R' bedeutet:

. eine zweiwertige lineare oder verzweigte aliphatische Gruppe, gesättigt oder enthaltend eine oder mehrere ethylenisch ungesättigte Bindung(en), mit 2 bis 24 Kohlenstoffatomen, deren Kette ein oder mehrere Sauerstoffatom(e) - O - oder Schwefelatom(e) - S - enthalten kann;

. eine Gruppe $-R_3-COO-R_4-$, wobei $R_3$ und $R_4$ gleich oder verschieden sind und für zweiwertige aliphatische lineare oder verzweigte Gruppen stehen, die gesättigt sind oder eine oder mehrere ethylenisch ungesättigte Bindung(en) enthalten und im Falle von $R_3$ 1 bis 18 Kohlenstoffatome und im Falle von $R_4$ 2 bis 18 Kohlenstoffatome enthalten;

. eine zweiwertige cycloaliphatische Gruppe aus einem oder mehreren Ringen mit insgesamt 5 bis 12 Kohlenstoffatomen, die mit einer oder mehreren Alkyl- oder Alkoxygruppe(n) mit 1 bis 6 Kohlenstoffatomen substituiert sein können;

. eine zweiwertige Cycloalkylen-alkylen- oder Cycloalkylen-dialkylenoder Cycloalkenylen-alkylen- oder Cycloalkenylen-dialkylengruppe mit einem oder mehreren Ringen und insgesamt 5 bis 12 Kohlenstoffatomen, die mit einer oder mehreren Alkyl- oder Alkoxygruppe(n) substituiert sein können, die 1 bis 6 Kohlenstoffatome enthalten, und deren aliphatische Teile 1 bis 6 Kohlenstoffatome enthalten und über ein Sauerstoffatom - O - an den Cyclus bzw. Ring gebunden sein können;

. eine Phenylendialkylengruppe, deren Ring gegebenenfalls durch eine oder mehrere Alkyl- oder Alkoxygruppe(n) mit 1 bis 6 Kohlenstoffatomen substituiert ist und deren aliphatischenTeile über ein Sauerstoffatom - O - an den Ring gebunden sein können;

. eine Verknüpfung von mehreren der vorgenannten Gruppen.

4. Verfahren nach einen der Ansprüche 1 bis 3, dadurch gekennzeichnet, daß man mindestens einen Diester der Thioäpfelsäure verwendet, der ausgewählt ist aus:

- den Verbindungen der allgemeinen Formel (I), in der $R_1$ und $R_2$ gleichoder verschieden sind und bedeuten:

. eine einwertige lineare oder verzweigte Gruppe, gesättigt oder enthaltend eine oder mehrere ethylenisch ungesättigte Bindung(en), mit 4 bis 36 Kohlenstoffatomen, deren Kette ein oder mehrere Saueratom(e) - Ooder Schwefelatom(e) - S - enthalten kann;

. eine Cyclohexyl- oder Cyclohexylalkylgruppe, deren Ring gegebenenfalls durch eine oder mehrere Alkyl- oder Alkoxygruppe(n) mit 1 bis 6 Kohlenstoffatomen substituiert ist und deren gegebenenfalls vorhandener aliphatischer Teil 1 bis 6 Kohlenstoffatome enthalt und uber ein Sauerstoffatom - O - an den Ring gebunden sein kann;

. eine Phenylalkylgruppe, deren Ring gegebenenfalls durch eine oder mehrere Alkyl- oder Alkoxygruppe(n) mit 1 bis 6 Kohlenstoffatomen substituiert ist und deren aliphatischer Teil 1 bis 6 Kohlenstoffatome enthält und über ein Sauerstoffatom - O - an den Ring gebunden sein kann;

. eine Verknüpfung von mehreren der vorgenannten Gruppen;
- und Verbindungen der allgemeinen Formel (II) in der:
- n eine ganze Zahl von 1 bis 4 ist und
- R' bedeutet:
. eine lineare oder verzweigte Alkylengruppe mit 2 bis 24 Kohlenstoffatomen;
. eine Gruppe $-R_3-COO-R_4-$, wobei $R_3$ und $R_4$ gleich oder verschieden sind und lineare oder verzweigte aliphatische Gruppen, gesättigt oder mit einer oder mehreren ethylenisch ungesattigten Bindung(en) bedeuten und wobei $R_3$ 1 bis 18 Kohlenstoffatome und $R_4$ 2 bis 18 Kohlenstoffatome enthält;
. eine Cyclohexylen- oder Cyclohexylenalkylenoder Cyclohexylen-dialkylengruppe, deren Ring gegebenenfalls durch eine oder mehrere Alkyl- oder Alkoxygruppe(n) mit 1 bis 6 Kohlenstoffatomen substituiert ist und deren gegebenenfalls vorhandenen aliphatischen Teile 1 bis 6 Kohlenstoffatome enthalten und über ein Sauerstoffatom - O - an den Ring gebunden sein können;
. eine Tricyclo(5, 2, 1, $0^{2,6}$)4, 8-dimethylendecan -gruppe;
. eine Phenylendialkylengruppe, deren Ring gegebenenfalls durch eine oder mehrere Alkyl- oder Alkoxygruppe(n) mit 1 bis 6 Kohlenstoffatomen substituiert ist und deren aliphatische Teile 1 bis 6 Kohlenstoffatome enthalten und über ein Sauerstoffatom - O - an den Ring gebunden sein können;
. eine Verknüpfung von mehreren der genannten Gruppen.

5. Verfahren nach einem der Ansprüche 1 bis 4, gekennzeichnet durch die Verwendung mindestens eines carbonsauren Salzes und/oder eines Phenolats als organische Zinkverbindung.

6. Verfahren nach einem der Ansprüche 1 bis 5, gekennzeichnet durch die Verwendung mindestens eines carbonsauren Salzes und/oder eines Phenolats als organische Verbindung eines Metalls der Gruppe IIa des Periodensystems.

7. Verfahren nach einem der Ansprüche 1 bis 6, gekennzeichnet durch die Verwendung einer Calcium- oder Magnesiumverbindung oder eines Gemisches von Calcium- und Magnesiumverbindungen als organische Verbindung eines Metalls der Gruppe IIa des Periodensystems.

8. Verfahren nach einem der Ansprüche 1 bis 7, dadurch gekennzeich- net, daß man, bezogen auf das zu stabilisierende Polymere, verwendet:
- 0,005 bis 1 Gew.-% organische Zinkverbindung,
- 0,005 bis 5 Gew.-% organische Verbindung eines Metalls der Gruppe IIa des Periodensystems,
- 0,005 bis 5 Gew.-% Diester der Thioäpfelsäure.

9. Verfahren nach einem der Ansprüche 1 bis 8, dadurch gekennzeich- net, daß man, bezogen auf das zu stabilisierende Polymere, verwendet:
- 0,01 bis 0,6 Gew.-% organische Zinkverbindung,
- 0,02 bis 1 Gew.-% organische Verbindung eines Metals der Gruppe IIa des Periodensystems,
- 0,05 bis 2 Gew.-% Diester der Thioäpfelsäure.

10. Verfahren nach einem der Ansprüche 1 bis 9, gekennzeichnet durch die Verwendung eines Polyols mit einem Siedepunkt oberhalb 150°C.

11. Verfahren nach einem der Ansprüche 1 bis 10, gekennzeichnet durch die Verwendung eines Polyols ausgewählt aus der Gruppe Sorbit, Mannit und Xylit.

12. Stabilisatormassen als Mittel zur Durchführung des Verfahrens nach einem der Ansprüche 1 bis II, die vor allem enthalten:
a) 5 bis 40 Gew.-% organische Zinkverbindung,
b) 5 bis 90 Gew.-% organische Verbindung eines Metalls der Gruppe IIa des Periodensystems,
c) 5 bis 90 Gew.-% Diester der Thioäpfelsäure.

13. Masse auf der Basis eines Polymeren von Vinylchlorid, erhalten durch das Verfahren nach einem der Ansprüche 1 bis 11.

14. Formkörper erhalten aus den durch das Verfahren nach einem der Ansprüche 1 bis 11 stabilisierten Polymeren.

## Claims

1. Process for stabilization of vinyl chloride-based polymers, comprising:
a) at least one organic zinc derivative;
b) at least one organic derivative of a metal of Group IIa of the Periodic Classification of the elements;
characterized by the use:
c) of at least one diester of thiomalic acid.

2. Stabilization process according to Claim 1, characterized in that the thiomalic acid ester corresponds: either to the general formula (I):

$$R_1-OOC - \underset{\displaystyle SH}{\underset{|}{CH}} - CH_2 - COOR_2 \qquad (I)$$

in which the radicals $R_1$ and R2, which may be identical or different, denote:
. a linear or branched aliphatic radical which is saturated or contains one or more ethylenic unsaturated bonds, and can contain one or more oxygen, - O -, or sulphur, - S -, atoms,
. a mono- or polycyclic cycloaliphatic or cycloaliphaticaliphatic radical, the cyclic portion optionally bearing one or more alkyl or alkoxy substituents, being able to contain one or more ethylenic unsaturated bonds and being able to be linked to the aliphatic portion through an oxygen atom, - O -,
. an arylaliphatic radical, the cyclic portion optionally bearing one or more alkyl or alkoxy substituents and being able to be linked to the aliphatic portion through an oxygen atom, - O -,
. an arrangement of several of the abovementioned radicals; or to the general formula (II):

$$OH - [-R'OOC - \underset{\displaystyle SH}{\underset{|}{CH}} - CH_2 - COO-]_n- R' - OH \quad (II)$$

in which:
n is an integer from 1 to 10,
R' denotes:
. a linear or branched divalent aliphatic radical which is saturated or contains one or more ethylenic unsaturated bonds, and in which the arrangement can contain one or more oxygen, - O -, or sulphur, - S -, atoms or one or more - COO - groups;
. a divalent mono- or polycyclic cycloaliphatic or cycloaliphaticaliphatic radical, the cyclic portion optionally bearing one or more alkyl or alkoxy substituents, being able to contain one or more ethylenic unsaturated bonds and being able to be linked to the aliphatic portion through an oxygen atom, - O -;
. a divalent aryl aliphatic radical, the cyclic portion optionally bearing one or more alkyl or alkoxy substituents and being able to be linked to the aliphatic portion through an oxygen atom, - O -;
. an arrangement of several of the abovementioned radicals.
3. Process according to one of Claims 1 and 2, characterized by the combined use of:
a) at least one organic zinc derivative chosen from the group consisting of carboxylic acid salts, metal derivatives of phenolic compounds, mercaptides and chelates of β-dicarbonyl compounds,
b) at least one organic derivative of a metal of Group IIa of the Periodic Classification of the elements, chosen from the group consisting of carboxylic acid salts, metal derivatives of phenolic compounds, mercaptides and chelates of β-dicarbonyl compounds of calcium, magnesium, barium and strontium,
c) at least one diester of thiomalic acid, chosen from: those which correspond to the general formula (I) in which $R_1$ and $R_2$, which may be identical or different, denote:
. a linear or branched aliphatic radical which may be saturated or contains one or more ethylenic unsaturated bonds, having from 2 to 36 carbon atoms and being able to contain one or more oxygen, - O -, or sulphur, - S -, atoms;
. a cycloaliphatic radical composed of one or more rings, the ring or rings having a total of 5 to 12 carbon atoms and optionally being substituted with one or more alkyl or alkoxy radicals having 1 to 6 carbon atoms;
. a cycloaliphatic or cycloalkenylaliphatic radical, composed of one or more rings having a total of 5 to 12 carbon atoms, and of an aliphatic arrangement having 1 to 6 carbon atoms and being able to be linked to the cyclic portion via an oxygen atom, - O -;
. an arylaliphatic radical in which the cyclic portion is optionally substituted with one or more alkyl radicals having from 1 to 12 carbon atoms or alkoxy radicals having 1 to 6 carbon atoms and in which the aliphatic arrangement has 1 to 6 carbon atoms and can be linked to the cyclic portion via an oxygen atom, - O -;
. an arrangement of several of the abovementioned radicals;
those which correspond to the general formula (II) in which:
n is an integer from 1 to 6
R' denotes:
. a linear or branched divalent aliphatic radical which may be saturated or contains one or more ethylenic unsaturated bonds, having from 2 to 24 carbon atoms and in which the arrangement can contain one or more oxygen, - O -, or sulphur, - S -, atoms;
. a radical - $R_3$ - COO - $R_4$ -, $R_3$ and $R_4$, which may be identical or different, being linear or branched divalent aliphatic radicals which may be saturated or contain one or more ethylenic unsaturated bonds, $R_3$ having from 1 to 18 carbon atoms and $R_4$ from 2 to 18 carbon atoms;
. a divalent cycloaliphatic radical composed of one or more rings having a total of 5 to 12 carbon atoms and being able to be substituted with one or more alkyl or alkoxy radicals having from 1 to 6 carbon atoms;
. a divalent cycloalkylenealkylene or cycloalkylenedialkylene or cycloalkenylenealkylene or

cycloalkenylenedialkylene radical containing one or more rings, having a total of 5 to 12 carbon atoms and being able to be substituted with one or more alkyl or alkoxy radicals having from 1 to 6 carbon atoms, and in which the aliphatic portions have from 1 to 6 carbon atoms and can be linked to the ring via an oxygen atom, - O -;

. a phenylenedialkylene radical in which the ring is optionally substituted with one or more alkyl or alkoxy radicals having from 1 to 6 carbon atoms and in which the aliphatic portions can be linked to the ring via an oxygen atom, - O -;

. an arrangement of several of the abovementioned radicals.

4. Process according to any one of Claims 1 to 3, characterized in that at least one diester of thiomalic acid is used, chosen from:

those which correspond to the general formula (I) in which $R_1$ and $R_2$, which may be identical or different, denote:

. a linear or branched monovalent aliphatic radical which may be saturated or contains one or more ethylenic unsaturated bonds, having from 4 to 36 carbon atoms and in which the arrangement can contain 1 or more oxygen, - O -, or sulphur, - S -, atoms;

. a cyclohexyl or cyclohexylalkyl radical, in which the ring is optionally substituted with one or more alkyl or alkoxy radicals having 1 to 6 carbon atoms and in which the possible alkyl portion contains from 1 to 6 carbon atoms and can be linked to the ring through an oxygen atom, - O -;

. a phenylalkyl radical in which the ring is optionally substituted with one or more alkyl or alkoxy radicals having from 1 to 6 carbon atoms and in which the aliphatic portion contains from 1 to 6 carbon atoms and can be linked to the ring through an oxygen atom, - O -;

. an arrangement of several of the above radicals;

and those which correspond to the general formula (II) in which:

n is an integer from 1 to 4,

R' denotes:

. a linear or branched alkylene radical having from 2 to 24 carbon atoms;

. a radical - $R_3$ - COO - $R_4$ -, $R_3$ and $R_4$, which may be identical or different, being linear or branched aliphatic radicals which may be saturated or contain One or more ethylenic unsaturated bonds, $R_3$ having from 1 to 18 carbon atoms and $R_4$ from 2 to 18 carbon atoms;

. a cyclohexylene radical or a cyclohexylenealkylene radical or a cyclohexylenedialkylene radical, in which the ring is optionally substituted with one or more alkyl or alkoxy radicals having 1 to 6 carbon atoms and in which the possible aliphatic portions contain from 1 to 6 carbon atoms and can be linked to the ring through an oxygen atom, - O -;

. a tricyclo[5.2.1.$0^{2,6}$]decane-4,8-dimethylene radical;

. a phenylenedialkylene radical in which the ring is optionally substituted with one or more alkyl or alkoxy radicals having 1 to 6 carbon atoms and in which the aliphatic portions contain from 1 to 6 carbon atoms and can be linked to the ring through an oxygen atom, - O -;

. an arrangement of several of the above radicals.

5. Process according to any one of Claims 1 to 4, characterized by the use, as the organic zinc derivative, of at least one carboxylic acid salt and/or a phenate.

6. Process according to any one of Claims 1 to 5, characterized by the use, as the organic derivative of a metal of Group IIa of the Periodic Classification of the elements, of at least one carboxylic acid salt and/or a phenate.

7. Process according to any one of Claims 1 to 6, characterized by the use, as the organic derivative of a metal of Group IIa of the Periodic Classification of the elements, of a calcium or magnesium derivative or of a mixture of derivatives of calcium and magnesium.

8. Process according to any one of Claims 1 to 7, characterized in that there are used:

from 0.005% to 1% by weight of organic zinc derivative relative to the polymer to be stabilized,

from 0.005% to 5% by weight of organic derivative of a metal of Group IIa of the Periodic Classification of the elements relative to the polymer to be stabilized,

from 0.005 to 5% by weight of thiomalic acid diester relative to the polymer to be stabilized.

9. Process according to any one of Claims 1 to 8, characterized in that there are used:

from 0.01% to 0.6% by weight of organic zinc derivative relative to the polymer to be stabilized,

from 0.02% to 1% by weight of organic derivative of a metal of Group IIa of the Periodic Classification of the elements relative to the polymer to be stabilized,

from 0.05 to 2% by weight of thiomalic acid diester relative to the polymer to be stabilized.

10. Process according to any one of Claims 1 to 9, characterized by the use of a polyol having a boiling point above 150° C.

11. Process according to any one of Claims 1 to 10, characterized by the use of a polyol chosen from the group consisting of sorbitol, mannitol and xylitol.

12. By way of a means for carrying out the process according to any one of Claims 1 to 11, stabilizing compositions containing, in particular:

a) from 5 to 40% by weight of organic zinc derivative,

b) from 5 to 90% by weight of organic derivative of a metal of Group IIa of the Periodic Classification of the elements,

c) from 5 to 90% by weight of thiomalic acid diester.

13. Composition based on vinyl chloride polymer, obtained by the process according to any one of Claims 1 to 11.

14. Shaped articles obtained from the polymers stabilized by the process according to one of Claims 1 to 11.